# EUROPEAN PATENT APPLICATION

(11) **EP 3 505 446 A1**
(43) Date of publication of application: **03.07.2019**
(21) Application number: 18382032.3
(22) Date of filing: 22.01.2018
(51) Int. Cl.: B64D 11/06, B29L 31/00

(54) **SEAT ASSEMBLY FOR AN AIRLINER**

(30) Priority: 28.12.2017 EP 17382921
(71) Applicant: Acondicionamiento Tarrasense, 08225 Terrassa Barcelona (ES)
(72) Inventor: Badalló Cañellas, Pere, 08225 Terrassa (ES); Barrientos Palma, Ruben, 08225 Terrassa (ES); Ortega Novillo, Adrián, 08225 Terrassa (ES); Gonzalez Sanchez, Miguel, 08225 Terrassa (ES); Rodriguez Español, Xavier, 08225 Terrassa (ES); De Santiago Giner, Núria, 08225 Terrassa (ES); Alonso Almirall, Óscar, 08225 Terrassa (ES)
(74) Representative: ZBM Patents - Zea, Barlocci & Markvardsen

(57) **Abstract**

A seat assembly comprises a common seat base (100) for a plurality of seats (101), the seat base comprising a base first part (110) and a base second part (120), wherein the base first part comprises a Sheet Moulding Composite (SMC) and the base second part comprises a Wet Compression Moulding Composite (WCMC), the base first part and the base second part being conjoined.

## Description

The project leading to this application has received funding from the European Union's Horizon 2020 research and innovation programme under grant agreement No 738076.

The present disclosure relates to a seat assembly, for an airliner, that comprises a common seat base for a plurality of seats.

### BACKGROUND

Low-cost airlines need to pack their airliners with as much seats as possible in order to keep the airfares low. However, the incorporation of too many seats has two main drawbacks:
- The increase in weight (the weight being a primary concern for its incidence in safety and fuel consumption).
- The lack of comfort for the passenger, who suffers from a lack of space (in particular of legroom) and, more importantly, is at risk of developing a Deep Vein Thrombosis (DVT) as this, albeit unlikely, is fostered by the quite restricted freedom of leg movement.

US 2009/0084925 A1 seeks to address these problems and discloses a composite seat pan comprising a composite fore cross beam, a composite aft cross beam and a reinforced skin. The skin has an upper surface and an opposite lower surface; the upper surface represents the support surface of the seat pan and the lower surface is coupled to the fore cross beam and to the aft cross beam. The skin is configured as a structural element that resists fore-aft bending of the two cross beams, i.e. the skin functions to increase the strength of the seat pan for purposes of the fore-aft load path. Thus, the structural characteristic of skin allows for the cross beams to be lightened because the cross beams no longer need to provide all the fore-aft strength and the rigidity to the seat pan.

However, US 2009/0084925 A1 does not properly address the DVT risk and does not dispense with relatively heavy metallic structural members, like the mentioned cross beams. Besides, the recycling of such a seat assembly is problematic due to the variety of materials involved.

### SUMMARY

It is an object of the present disclosure to provide a seat assembly, especially for a low-cost airliner, that overcomes, at least in part, the above-mentioned problems and drawbacks.

A few definitions are introduced first:
Longitudinal direction in the seat assembly: the several seat portions in the assembly are usually arranged in a row that extends transversely within the aircraft, but this direction that may be transverse to the aircraft is intrinsically longitudinal to the seat assembly itself, and is herein termed 'longitudinal direction'; this longitudinal direction is normally horizontal with reference to the installed seats.
Forward direction in the seat: the direction to the front of the passenger.
Backward direction in the seat: the direction to the rear of the passenger.
Transverse direction in the seat assembly: either of said forward or backward direction; it is perpendicular to the longitudinal direction in the seat assembly.
Front part of the backrest: that facing to the seated passenger.
Rear part of the backrest: that facing to the passenger behind.
Upper direction: vertical upwards direction.
Lower direction: vertical downwards direction.

Now, according to a first aspect of the present disclosure, a seat assembly comprises a common seat base for a plurality of seats, the seat base comprising a base first part and a base second part, wherein the base first part comprises a Sheet Moulding Composite (SMC) and the base second part comprises a Wet Compression Moulding Composite (WCMC).

These two composite parts form a self-supporting, monocoque or semi-monocoque structure that allows to dispense with metallic members and to use only polymeric materials, which, by the way, will greatly simplify their recycling when the time comes. A monocoque is a structural system where loads are supported through a shell or skin; such a structure can carry both tensile and compressive forces within the skin and can dispense with an internal frame. A semi-monocoque is a hybrid structure combining a tensile stressed skin and a compressive structural frame.

Regarding SMCs, the Wikipedia explains (https://en.wikipedia.org/wiki/Sheet moulding compound) that a Sheet Moulding Compound or Composite (SMC) is a ready to mould glass-fibre reinforced polyester material primarily used in compression moulding. SMC is both a process and a reinforced composite material (the latter meaning is the one considered herein) that is manufactured by dispersing strands of chopped carbon fiber on a bath of a thermoset resin (commonly polyester resin, vinyl ester or epoxy resin).

In the general SMC process, a paste reservoir dispenses a measured amount of specified resin paste onto a plastic carrier film. This carrier film passes underneath a chopper which cuts the fibers onto the surface. Once these have drifted through the depth of resin paste, another sheet is added on top which sandwiches the glass. The sheets are compacted and then enter onto a take-up roll, which is used to store the product whilst it matures. The carrier film is later removed and the material is cut into charges. Heat and pressure act on the charge and, once fully cured, this is then removed from the mould as the finished product.

Regarding WCMC materials, Wet Compression Moulding (WCM) is a process which does not use prefabricated sheets of resin/ thermoplastic polymer combined with discontinuous fibers, but instead begins with dry continuous reinforcements and liquid resin, including wet layup, resin infusion or resin transfer moulding (see https://www.compositesworld.com/blog/post/wet-compression-molding). In contrast to previous methods, WCM applies the mixed resin onto the surface of the carbon fiber reinforcements outside of the press. This allows parallel processing (i.e. application of resin while other parts are curing in the press). Curing with WCM is typically faster than with other methods because no latency is required for resin injection. As applied herein, a Wet Compression Moulding Composite (WCMC) is a product of a WCM process.

In an example, the base first part may be made from a pre-preg. The Wikipedia explains (https://en.wikipedia.org/wiki/Pre-preg) that a pre-preg is "pre-impregnated" composite fibers where a thermoset polymer matrix material, such as epoxy, is already present. The fibers often take the form of a weave and the matrix is used to bond them together and to other components during manufacture. The thermoset matrix is only partially cured to allow easy handling.

In an example, the pre-peg may be co-moulded with the SMC. Co-moulding, or co-injection moulding, involves sequential or concurrent injection of two different but compatible polymer melts into a cavity. The materials laminate and solidify. This process produces parts that have a laminated structure, with the core material (e.g. pre-preg) embedded between the layers of the skin material (e.g. SMC). (See http://www.dc.enqr.scu.edu/cmdoc/dq doc/develop/process/molding/b220000 1.htm).

In an example, the pre-peg may comprise a carbon fiber reinforced polymer (CFRP).

According to another aspect of the present disclosure, a seat base for a plurality of airliner seats comprises a base lower part and a base upper part rigidly attached to each other, the base upper part comprising a straight protrusion that extends longitudinally across an upper surface of said upper part, the seat base further comprising a plate arranged to pivot on and about the top of said protrusion.

This pivotable plate allows the passenger to vary the orientation of her/his body and to stretch or fold her/his legs as desired, thus increasing the legroom and preventing DVT.

According to another aspect of the present disclosure, a footrest, intended for an airliner seat having an underneath luggage retaining bar, comprises a tubular section intended to be hingedly mounted on the luggage bar, in order to allow the rotation of the footrest between a retracted position under the seat and an extended position that projects forward from underneath the seat.

This further improves passenger comfort as it allows she/he to rest her/his legs with the knees up and the buttocks down and back (especially when combined with the pivotable plate).

According to another aspect of the present disclosure, a backrest for an airliner seat comprises a backrest rear part and a backrest front part, wherein the backrest rear part comprising a Sheet Moulding Composite (SMC) and the backrest front part comprising a Wet Compression Moulding Composite (WCMC), which forms again a semi-monocoque structure easily recyclable.

According to another aspect of the present disclosure, a leg for a set of airliner seats comprises two WCMC 'C-shaped' profile parts co-moulded together to form one 'H-shaped' profile part, which again dispenses with metallic members. The leg may comprise three segments forming an 'N', which allows to dispense with the usual metallic brace.

Further advantages, properties, aspects and features of the present disclosure may be derived from the below-described examples. The above-described features and/or the features disclosed in the claims and/or in the following description of examples and clauses can, if required, also be combined with one another even if this is not expressly described in detail.

### BRIEF DESCRIPTION OF THE DRAWINGS

Non-limiting examples of the present disclosure will be described in the following, with reference to the appended drawings, in which:
figure 1 shows a seat assembly for an airliner;
figure 2 shows a part of a seat base;
figure 3 shows another part of the seat base;
figure 4A shows yet another part of the seat base;
figure 4B shows an enhanced detail of figure 4A;
figure 5 shows two parts of a backrest;
figure 6 shows a headrest;
figure 7 shows a leg;
figure 8 shows a footrest;
figure 9 shows a retracted position of the footrest; and
figure 10 shows an extended position of the footrest.

### DETAILED DESCRIPTION OF EXAMPLES

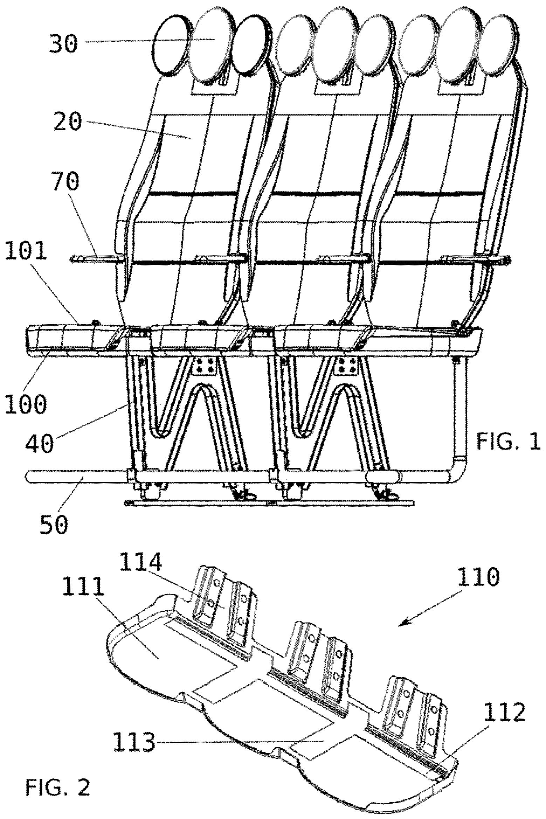

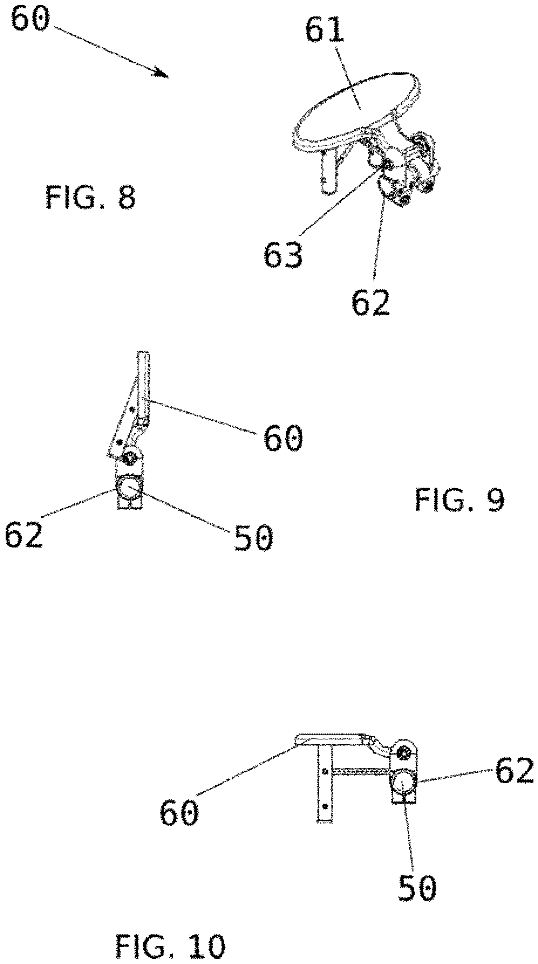

As shown in figure 1, one example of a three-seat assembly comprises a base 100 which is common for the three seats 101, three backrests 20, three headrests 30, two legs 40, a luggage retaining bar 50 and four armrests 70. The assembly further comprises three footrests 60 (not shown in figure 1, see figures 9 and 10) attached to the luggage bar 50.

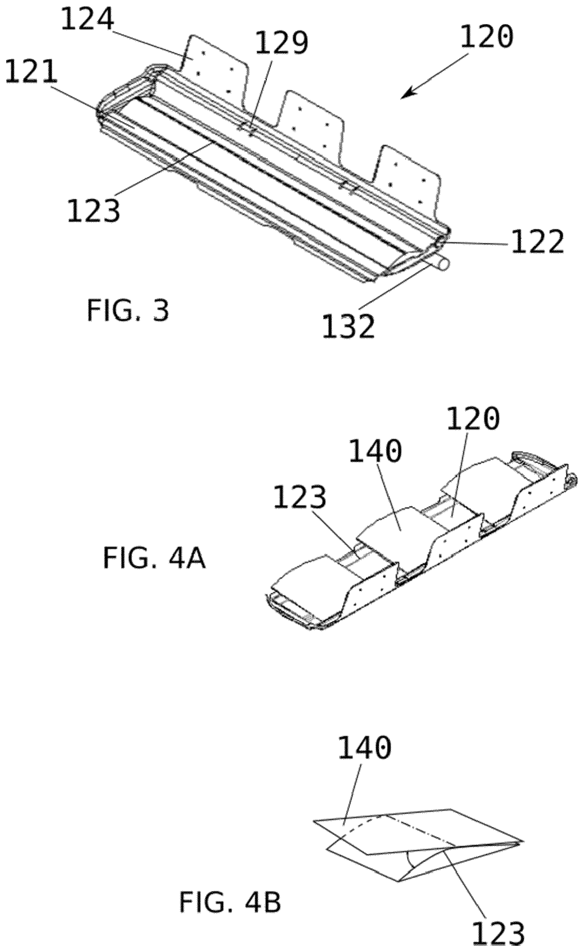

The base 100 comprises a lower part 110 (figure 2) and an upper part 120 (figure 3) that may be joined together by way of a plasma treatment. The lower part 110 comprises a platform 111 made of a Sheet Moulding Composite (SMC) and reinforced with a rear longitudinal strip 112 and two transverse strips 113 (figure 2) that are embedded in the platform 111. The strips 112 and 113 comprise a reinforced composite, such as a Wet Compression Moulding Composite (WCMC, with for instance woven carbon fibers) or a CFRP pre-preg, and can be co-moulded with the platform 111.

Turning again to figure 2, the lower part 110 further comprises three flanges 114 in an upright position with respect to the platform 111. The longitudinal strip 112 is located under the flanges 114.

The SMC of the lower part 110 can comprise woven or non-woven carbon fibers.

The upper part 120 (figure 3) is made of a Wet Compression Moulding Composite (WCMC) material and comprises a platform 121, three flanges 124 (analogous to the flanges 114), a lower groove 122 extending longitudinally below the flanges 124 and some safety belt inserts 129 above the groove 122. A reinforcing tube 132 may be inserted in the tubular section defined by the groove 122 and the bend between the platform 111 and the flanges 114 in the lower part 110.

When the lower part 110 and the upper part 120 are joined, the flanges 114 and 124 are correspondingly attached to each other.

The upper part 120 further comprises a longitudinal protrusion 123 on the front region of the platform 121, said protrusion having a straight top line (the crest of the protrusion).

A plate 140 (figure 4A) is pivotally arranged on the upper part 120, the pivot being the crest of the protrusion 123 (fig. 4B). Two pieces of fabric joined (e.g. welded) by a central line, to form four flaps, provide, together with said crest, a hinged attachment between the plate 140 and the upper part 120, the two uppermost flaps being connected (e.g. glued) to the plate 140 and the two lowermost flaps being connected to the upper part 120. Other than this, the pivoting is essentially unconstricted within a range of about ±5° with respect to a horizontal plane. In an example, the fabric is polyester.

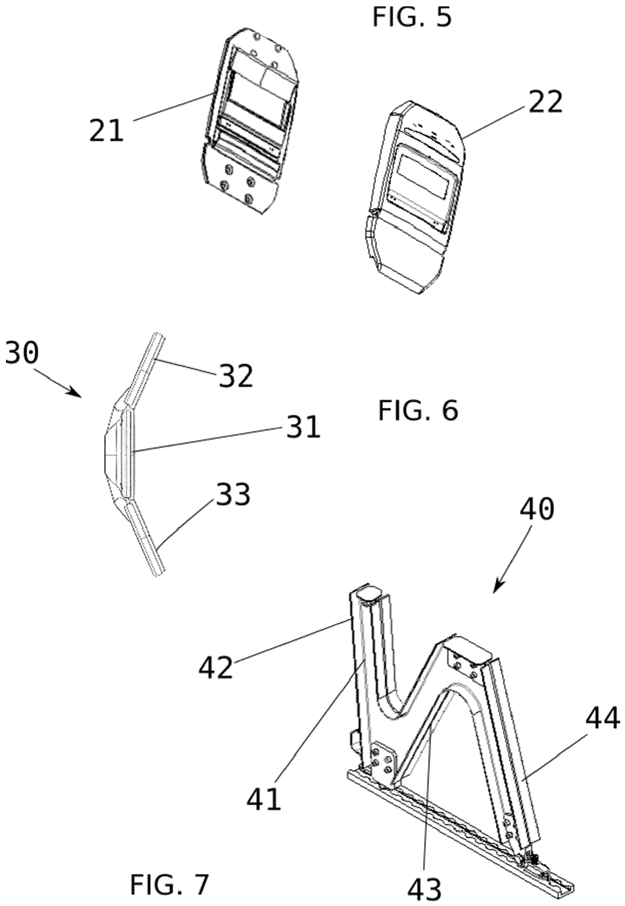

Analogously to the base 100, each backrest 20 comprises a rear part 21 made of a SMC material and a front part 22 made of a WCMC material (figure 5). Each backrest 20 is fixedly attached to one corresponding flange of the base 100 (actually to one set of conjoined flanges 114 and 124), that is, the backrest is not reclinable.

In an example, each headrest 30 (figure 6) comprises a central part 31 and two side parts 32, the latter ones being hingedly attached to the former one in order to be foldable towards or away from the side of the passenger head.

Each leg 40 is N-shaped (figure 7) and is thus provided with a front segment 42, a rear segment 44 and a central segment 43. The rear segment 44 acts as a traction brace to hold the leg in position (attached to the floor) in case of a crash. The profile 41 of the leg 40 is H-shaped and can be made by conjoining two C-shaped profiles back-to-back. The leg is made of a WCMC material and the C-shaped profiles can be joined by co-moulding them together. The leg can also be made from a CFRP pre-preg.

Each leg 40 is located under one corresponding transverse strip 113, which mutually reinforce each other.

In an example, the seat assembly comprises three footrests 60 (figure 8) attached to the luggage bar 50 (figures 9 and 10). Each footrest 60 comprises a platform 61 to rest the feet on, and a tubular section 62 to be clamped onto the luggage bar 50. The platform 61 can rotate about a pin 63 between a retracted position (figure 9) and an extended position (figure 10).

In this way, the passenger can, for instance, raise her/his fee onto the extended footrest 60 and simultaneously move her/his trunk backwards by taking advantage of the backward pivoting of the plate 140, or, with the footrest retracted, she/he can stretch her/his legs (with her/his feet under the next front seat) while slightly sliding her/his buttocks forwards, by taking advantage of the forward pivoting of the plate 140.

Incidentally, the short passengers do not have to leave their feet hanging from the seat, as they can rest them on the footrest.

A further advantage of the seat assembly is that, by virtue of being mostly made of carbon and polymeric materials, it is readily recyclable (the seat assemble can be made so that the only non-carbon-based parts are metal joints, such as screws and nuts).

In sum, among the advantages of the disclosed seat assembly the following can be highlighted:
- Lightweight
- Simplicity (reduction of components)
- Easy disassembly
- Enhanced recycling
- Elimination of metallic components (complete or almost complete)
- Use of the same reinforced composite material (polyurethane and carbon fiber) in all the structural members
- Monocoque or semi-monocoque elements (e.g. the seat base 100)
- Simple geometry for the legs
- Enhanced comfort with overall increased number of seats (or at least without any reduction thereof)

The preceding examples describe a combination of different elements, namely: three seats 101 in a row, a base 100 that is common for the three seats 101, three backrests 20, three headrests 30, two legs 40, a luggage retaining bar 50, three footrests 60 and four armrests 70. The assembly further comprises three footrests 60 (not shown in figure 1, see figures 9 and 10) attached to the luggage bar 50. While these elements have been described as forming an assembly (a seat assembly), they can also be thought of as separate members which can be freely combined with each other (e.g. with only some of them) or with other members not described herein. For instance, the number of seats is obviously a non-limiting feature, the legs 40 can support other types of seats, the backrest 20 can be combined with other seat bases, the headrest 30 and the footrest 60 can be associated to other types of seats, etc. In short, each of these elements can be thought of as an independent disclosure.

For the sake of completeness, various aspects of the present disclosure are set out in the following numbered clauses:
Clause 1. A seat assembly for an airliner, the assembly comprising a common seat base (100) for a plurality of seats (101), the seat base comprising a base first part (110) and a base second part (120), wherein the base first part comprises a Sheet Moulding Composite (SMC) and the base second part comprises a Wet Compression Moulding Composite (WCMC).
Clause 2. The seat assembly of clause 1, wherein the base first part (110) is made from a pre-preg that is then co-moulded with the SMC.
Clause 3. The seat assembly of clause 1 or 2, wherein the base first part (110) and the base second part (120) are joined together by way of a plasma treatment.
Clause 4. The seat assembly of any of the preceding clauses, wherein both the base first part and the base second part comprise polyurethane and carbon fiber materials.
Clause 5. The seat assembly of any of the preceding clauses, wherein the base first part (110) comprises a SMC comprising a reinforced core.
Clause 6. The seat assembly of clause 5, wherein the reinforced core comprises a long strip (112) extending longitudinally across the seat base (100) and two short strips (113) perpendicular to the long strip and connected thereto.
Clause 7. The seat assembly of clause 5 or 6, wherein the reinforced core comprises a WCMC.
Clause 8. The seat assembly of any of clauses 5 or 6, wherein the reinforced core comprises a pre-preg.
Clause 9. The seat assembly of any of clauses 5 to 8, wherein the SMC comprises polyurethane and carbon fibers materials.
Clause 10. The seat assembly of any of the preceding clauses, wherein the base first part (110) comprises a first platform (111) and a plurality of first flanges (114) at an angle of 80°-120° with respect to the first platform.
Clause 11. The seat assembly of clause 10, wherein there is one first flange (114) for each seat (101).
Clause 12. The seat assembly of any of the preceding clauses, wherein the base second part (120) comprises a second platform (121) and a plurality of second flanges (124) at an angle of 80°-120° with respect to the second platform.
Clause 13. The seat assembly of clause 12, wherein there is one second flange (124) for each seat (101).
Clause 14. The seat assembly of clauses 10 and 12, wherein the first and second flanges are arranged to be adjacent to each other when the first and second base parts are joined together.
Clause 15. The seat assembly of any of the preceding clauses, wherein the base first part (110) is a lower part of the seat base (100) and the base second part (120) is an upper part of the seat base (100).
Clause 16. The seat assembly of clauses 10 and 15, wherein the junction region between the first platform (111) and the plurality of first flanges (114) is a curved concave surface.
Clause 17. The seat assembly of clauses 12 and 15, wherein the base second part (120) comprises a lower groove (122) encompassing the plurality of seats (101) and extending below the junction region between the second platform (121) and the plurality of second flanges (124).
Clause 18. The seat assembly of clauses 16 and 17, wherein the seat base (100) comprises a tube portion formed by the lower groove (122) of the base second part (120) and the curved concave surface of the base first part (110).
Clause 19. The seat assembly of clause 18, wherein the seat base (100) comprises a reinforcing tube (132) mounted within the tube portion (122).
Clause 20. The seat assembly of clause 19, wherein the reinforced tube (132) comprises polyurethane and carbon fiber materials.
Clause 21. The seat assembly of any of the preceding clauses, wherein the base second part (120) comprises a plurality of fittings (129) for a corresponding plurality of seat belts.
Clause 22. The seat assembly of any of clauses 15 to 21, wherein the base second part (120) comprises an upper protrusion (123) encompassing the plurality of seats (101).
Clause 23. The seat assembly of clauses 17 and 22, wherein the upper protrusion (123) of the base second (120) part extends across the base second part in parallel to the lower groove (122) thereof.
Clause 24. The seat assembly of clause 22 or 23, wherein the top line of the upper protrusion (123) is a straight line.
Clause 25. The seat assembly of clause 24, wherein the seat base (100) comprises a plate (140) for one seat (101), the plate being arranged to pivot on and about the top straight line of the upper protrusion (123) of the base second part (120).
Clause 26. The seat assembly of clause 25, wherein the plate (140) is freely pivotable within a range of ±3°-10°.
Clause 27. The seat assembly of clause 25 or 26, wherein the plate (140) comprises a SMC.
Clause 28. The seat assembly of clause 26 or 27, wherein the seat base (100) comprises two conjoined pieces of fabric forming two lower flaps and two upper flaps, so that the two lower flaps are attached to the base second part (120) and the two upper flaps are attached to the plate (140).
Clause 29. The seat assembly of any of clauses 26 to 28, wherein the seat base (100) comprises a plurality of plates (140), one plate for each seat (101).
Clause 30. The seat assembly of any of the preceding clauses, comprising a plurality of backrests (20), one backrest for each seat (101).
Clause 31. The seat assembly of clause 14 and 30, wherein each backrest (20) is attached to one of the flanges (114, 124) of the seat base (100).
Clause 32. The seat assembly of clause 31, wherein each backrest (20) is fixedly attached to one of the flanges (114, 124) of the seat base (100).
Clause 33. The seat assembly of any of clauses 30 to 32, wherein each backrest (20) comprises a backrest first part (21) and a backrest second part (22), wherein the backrest first part comprises a Sheet Moulding Composite (SMC) and the backrest second part comprises a Wet Compression Moulding Composite (WCMC).
Clause 34. The seat assembly of clause 33, wherein the backrest first part (21) is a rear part of the backrest (20) and the backrest second part (22) is a front part of the backrest (20).
Clause 35. The seat assembly of any of clauses 30 to 34, wherein each backrest (20) comprises a headrest (30) provided with a headrest central part (31) and two headrest side parts (32; 33), the latter ones being hingedly attached to the former one.
Clause 36. The seat assembly of clause 35, wherein the headrest central part (31) is wider and taller than the headrest side parts (32; 33).
Clause 37. The seat assembly of any of the preceding clauses, comprising a plurality of legs (40) further comprising a WCMC profile.
Clause 38. The seat assembly of clauses 7 and 37, wherein each leg (40) is placed under one short strip (113) of the base first part (110).
Clause 39. The seat assembly of clause 38, wherein at least one leg (40) comprises two 'C-shaped' profile parts attached back-to-back to form one 'H-shaped' profile part.
Clause 40. The seat assembly of clause 39, wherein the two 'C-shaped' profile parts are joined together by co-moulding.
Clause 41. The seat assembly of any of clauses 38 to 40, wherein at least one leg (40) comprises three segments forming an 'N'.
Clause 42. The seat assembly of any of clauses 38 to 41, wherein at least one leg comprises two segments forming a 'V'.
Clause 43. The seat assembly of clause 42, comprising a brace attached to at least one leg in 'V'.
Clause 44. The seat assembly of clause 43, wherein the brace is made from a titanium alloy.
Clause 45. The seat assembly of clauses 25 and 37, comprising an underneath luggage bar (50) attached to the legs (40) and a footrest (60) attached to the luggage bar (50), the footrest being movable between a retracted position under the seat base (100) and an extended position that projects forward from underneath the seat base.
Clause 46. The seat assembly of clause 45, wherein the footrest (60) is hinged to the luggage bar (50) to allow the rotation of the footrest between the retracted position and the extended position.
Clause 47. A seat base (100) for a plurality of airliner seats (101), comprising a base lower part (110) and a base upper part (120) rigidly attached to each other, the base upper part comprising a straight protrusion (123) that extends longitudinally across an upper surface of said upper part, the seat base further comprising a plate (140) arranged to pivot on and about the top of said protrusion.
Clause 48. The seat base of clause 47, wherein the plate (140) is freely pivotable within a range of ±3°-10°.
Clause 49. The seat base of clause 47 or 48, comprising two conjoined pieces of fabric forming two lower flaps and two upper flaps, so that the two lower flaps are attached to the base upper part (120) and the two upper flaps are attached to the plate (140).
Clause 50. A backrest (20) for an airliner seat (101), comprising a backrest rear part 821) and a backrest front part (22), wherein the backrest rear part comprising a Sheet Moulding Composite (SMC) and the backrest front part comprising a Wet Compression Moulding Composite (WCMC).
Clause 51. A leg (40) for a set of airliner seats (101), comprising two WCMC 'C-shaped' profile parts co-moulded together to form one 'H-shaped' profile part.
Clause 52. The leg of clause 51, comprising three segments forming an 'N'.
Clause 53. The leg of clause 51 or 52, comprising two segments forming a 'V'.
Clause 54. The leg of clause 53, comprising a titanium brace attached to the 'V' segments.
Clause 55. A footrest (60) for an airliner seat (101) having an underneath luggage bar (50), the footrest comprising a tubular section (62) intended to be hingedly mounted on the luggage bar, in order to allow the rotation of the footrest between a retracted position under the seat and an extended position that projects forward from underneath the seat.
Clause 56. A seat assembly for an airliner, the assembly comprising a common seat base (100) for two or more seats (101), the seat base comprising a base lower part 8110) and a base upper part (120), wherein the base lower part is a Sheet Moulding Composite (SMC) moulded on a Wet Compression Moulding Composite (WCMC) core, the base upper part is a WCMC, and these two parts are joined by co-moulding.
Clause 57. The seat assembly of clause 56, wherein the base upper part (120) comprises a straight protrusion (123) that extends longitudinally across an upper surface of said upper part, the seat base further comprising a plate (140) arranged to pivot on and about the top of said protrusion.
Clause 58. A seat assembly for an airliner, the assembly comprising a common seat base (100) for three seats (101), the seat base comprising a long WCMC strip (112) extending longitudinally across the seat base and two short WCMC strips (113) perpendicular to the long strip and connected thereto, the assembly further comprising two WCMC legs (40), each leg being placed under one different short strip.
Clause 59. The seat assembly of clause 58, wherein each leg (40) comprises two 'C' profile parts attached back-to-back to form one 'H' profile part.
Clause 60. The seat assembly clause 58 or 59, wherein at least one leg (40) comprises three segments forming an 'N'.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow. If reference signs related to drawings are placed in parentheses in a claim, they are solely for attempting to increase the intelligibility of the claim, and shall not be construed as limiting the scope of the claim.

## Claims

1. A seat assembly for an airliner, the assembly comprising a common seat base (100) for a plurality of seats (101), the seat base comprising a base first part (110) and a base second part (120), wherein the base first part comprises a Sheet Moulding Composite (SMC) and the base second part comprises a Wet Compression Moulding Composite (WCMC), the base first part and the base second part being conjoined.

2. A seat assembly according to claim 1, wherein the base first part (110) is made from a pre-preg.

3. A seat assembly according to claim 1 or 2, wherein the base first part (110) comprises a long strip (112) extending longitudinally across the seat base and two short strips (113) perpendicular to the long strip and connected thereto, all these strips comprising a reinforced composite.

4. A seat assembly according to any of the preceding claims, wherein the base first part (110) comprises a first platform (111) and a plurality of first flanges (114) at an angle of 80°-120° with respect to the first platform.

5. A seat assembly according to any of the preceding claims, wherein the base second part (120) comprises a second platform (121) and a plurality of second flanges (124) at an angle of 80°-120° with respect to the second platform.

6. A seat assembly according to claims 4 and 5, wherein the first and second flanges are arranged to be adjacent to each other when the first and second base parts are joined together.

7. A seat assembly according to any of the preceding claims, wherein the base first part (110) is a lower part of the seat base (100) and the base second part (120) is an upper part of the seat base (100).

8. A seat assembly according to claim 7, wherein the base second part (120) comprises an upper protrusion (123) encompassing the plurality of seats (101).

9. A seat assembly according to claim 8, wherein the top line of the upper protrusion (123) is a straight line.

10. A seat assembly according to claim 9, wherein the seat base (100) comprises a plate (140) for one seat (101), the plate being arranged to pivot on and about the top straight line of the upper protrusion (123) of the base second part (120).

11. A seat assembly according to any of the preceding claims comprising a plurality of backrests (20), wherein each backrest comprises a backrest first part (121) and a backrest second part (122), wherein the backrest first part comprises a Sheet Moulding Composite (SMC) and the backrest second part comprises a Wet Compression Moulding Composite (WCMC).

12. A seat assembly of any of the preceding claims, comprising a plurality of legs (40) further comprising a WCMC profile.

13. A seat assembly of claims 3 and 12, wherein each leg (40) is placed under one short strip (113) of the base first part (110).

14. A seat assembly according to claim 12 or 13, wherein at least one leg (40) comprises three segments forming an 'N'.

15. A seat assembly according to claims 10 and 14, comprising an underneath luggage bar (50) attached to the legs (40) and a footrest (60) attached to the luggage bar, the footrest being movable between a retracted position under the seat base (100) and an extended position that projects forward from underneath the seat base.
